# EUROPÄISCHE PATENTSCHRIFT

(11) **EP 3 789 512 B1**
(45) Veröffentlichungstag und Bekanntmachung des Hinweises auf die Patenterteilung: **15.11.2023**
(21) Anmeldenummer: 19196156.4
(22) Anmeldetag: 09.09.2019
(51) Int. Cl.: C23C 4/12, C23C 4/123, C23C 4/134, C23C 24/10, B22F 3/105, B22F 7/08, B23K 26/14, B23K 26/16, B23K 26/342, B05B 7/22, B05B 13/02, B05B 14/30, B05C 9/04, F16D 65/00, B05B 16/20, F16D 65/12

(54) **ANLAGE UND VERFAHREN ZUM BESCHICHTEN VON BREMSSCHEIBEN ODER BREMSTROMMELN**
INSTALLATION AND METHOD FOR COATING WORKPIECES
INSTALLATION ET PROCÉDÉ DE REVÊTEMENT DE PIÈCES

(43) Veröffentlichungstag der Anmeldung: 10.03.2021
(73) Patentinhaber: Sturm Maschinen- & Anlagenbau GmbH, 94330 Salching (DE)
(72) Erfinder: Martin, Carlos, 94469 Deggendorf (DE); Baier, Roland, 93077 Bad Abbach (DE)
(74) Vertreter: Wunderlich & Heim Patentanwälte Partnerschaftsgesellschaft mbB

(56) Entgegenhaltungen:
- WO-A1-2009/018841
- CN-A- 107 309 130
- DE-A1-102006 046 968
- US-A1- 2005 186 327

## Beschreibung

Die Erfindung betrifft eine Anlage zum Beschichten von Werkstücken, in Form von Bremsscheiben oder Bremstrommeln, mit einer Beschichtungsvorrichtung, welche zum Aufbringen einer metallischen Beschichtung auf eine Fläche des Werkstücks ausgebildet ist, gemäß dem Oberbegriff des Anspruchs 1.

Weiterhin betrifft die Erfindung ein Verfahren zum Beschichten von Werkstücken ,in Form von Bremsscheiben oder Bremstrommeln, gemäß dem Anspruch 12.

Seit Längerem sind Anlagen und Verfahren zum Beschichten von Werkstücken mit einer Beschichtungsvorrichtung bekannt, durch welche eine metallische Beschichtung auf eine Werkstückfläche aufgebracht wird. Solche Beschichtungsvorrichtungen sind etwa bei der Beschichtung von Zylinderbohrungen in Motorblöcken im Einsatz, wobei ein Plasma-Spritzverfahren, ein Thermo-Spritzverfahren oder andere Metallbeschichtungsverfahren zum Einsatz kommen.

Aus der DE 10 2006 046 968 A1 ist auf eine Lackieranlage, insbesondere für Kunststoffteile, die z.B. durch Spritzgießen hergestellt wurden, bekannt. Die zu beschichtenden Teile können mit verschiedenen Lackierungen und/anderen Beschichtungen versehen werden. Mittels Sputtereinrichtung können auch metallische Beschichtungen aufgebracht werden. Eine Beschichtung von metallischen Werkstücken, wie Bremsscheiben ist einerseits weder vorgesehen, noch scheint sich die vorgestellte Anlage dafür zu eignen.

Aus der EP 3 048 181 B1 der Anmelderin ist eine Anlage und ein Verfahren zur metallischen Beschichtung von Werkstücken bekannt, bei welchem ein Motorblock mit zu beschichtenden Zylinderbohrungen auf einem Drehtisch angeordnet wird, mit welchem das Werkstück zwischen einer Ladestation und einer Bearbeitungsstation verschwenkt werden kann. Der Motorblock wird dabei in der Ladestation aufgenommen, wobei die Zylinderbohrungen mit einer Messeinrichtung vermessen werden. Anschließend wird der Motorblock in die Beschichtungsposition verschwenkt, wobei eine metallische Beschichtung auf die zylindrischen Bohrungsflächen mittels Plasmaspritzen aufgebracht wird. Gleichzeitig wird beim Einschwenken des Motorblocks in die Beschichtungsposition ein fertig beschichteter Motorblock zurück in die Ladeposition verschwenkt. Der beschichtete Motorblock wird dabei vor dem Entladen aus der Ladestation mit der Messeinrichtung vermessen.

In der Ladestation werden so die beschichteten Flächen des Motorblocks durch die Messeinrichtung nochmals vermessen, so dass etwa Beschichtungsfehler unmittelbar festgestellt werden können.

Bei diesem bekannten Stand der Technik kann somit ein Vermessen und Beschichten in einer einzigen Vorrichtung erfolgen, wobei je Beschichtungsvorrichtung nur eine Messeinrichtung benötigt wird. Hierdurch wird erreicht, dass die großen und relativ teuren Motorblöcke effizient und mit hoher Beschichtungsqualität und Beschichtungssicherheit bearbeitet werden können.

Der Erfindung liegt die **Aufgabe** zugrunde, eine Anlage und ein Verfahren zum Beschichten von Werkstücken anzugeben, mit welchen eine erhöhte Effizienz auch bei kleineren Werkstücken erzielt werden kann.

Die Aufgabe wird nach der Erfindung zum einen durch eine Anlage mit den Merkmalen des Anspruchs 1 und zum anderen durch ein Verfahren mit den Merkmalen des Anspruchs 12 gelöst. Bevorzugte Ausführungsformen der Erfindung sind in den abhängigen Ansprüchen angegeben.

Die erfindungsgemäße Anlage ist dadurch gekennzeichnet, dass mehrere Beschichtungsvorrichtungen zum Aufbringen einer metallischen Beschichtung, welche als gleichartige Beschichtungsmodule ausgebildet sind, vorgesehen und in einer Modulgruppe angeordnet sind, dass der Modulgruppe eine Eingangsmessstation zugeordnet ist, durch welche eine Oberfläche der zu beschichtenden Fläche des Werkstücks erfassbar ist, dass eine Fördereinrichtung vorgesehen ist, durch welche ein Werkstück von der Eingangsmessstation einem der Beschichtungsmodule zuführbar ist, und dass der Modulgruppe eine Ausgangsmessstation zugeordnet ist, durch welche eine Oberfläche der beschichteten Fläche des Werkstücks erfassbar ist.

Eine Grundidee der Erfindung besteht darin, zur Erhöhung der Effizienz eine Vielzahl von im Wesentlichen gleichartig aufgebauten Beschichtungsmodulen vorzusehen, die eine Modulgruppe bilden. Dabei wird gemäß der Erfindung nicht einem einzelnen Beschichtungsmodul eine Messstation zugeordnet, sondern der Modulgruppe insgesamt werden eine gemeinsame Eingangsmessstation und eine gemeinsame Ausgangsmessstation zugeordnet. Dies stellt eine weitgehend gleichmäßige Messung der Werkstücke vor und nach der Bearbeitung sicher. Es können so eine Vielzahl von Werkstücken mit einer vergleichbaren Qualität erzielt werden. Auch wird bei effizienten Kosten für den Anlagenaufbau ein erhöhter Grad der Verfügbarkeit erreicht, da bei Ausfall einer der wartungsintensiven Beschichtungsvorrichtungen diese durch ein anderes Beschichtungsmodul ohne weiteres ersetzt werden kann, wobei die Messstationen weiter benutzt werden können. Mit der Anlage können insbesondere abriebarme und/oder besonders korrosionsbeständige Massenteile hergestellt werden, etwa Bremsscheiben oder Bremstrommeln mit metallischen Bremsflächen.

Die Fördereinrichtung kann beliebig ausgebildet sein und etwa einen oder mehrere Handhabungsroboter umfassen.

Ein besonders kompakter und robuster Aufbau wird nach einer Weiterbildung der Erfindung dadurch erzielt, dass die Fördereinrichtung einen Linearförderer aufweist, entlang welchem die einzelnen Beschichtungsmodule angeordnet sind. Das zu bearbeitende Werkstück kann so an den einzelnen Beschichtungsmodulen vorbei laufen, bis dieses etwa durch eine separate Handhabungs- oder Zuführeinheit einem ausgewählten Beschichtungsmodul zugeführt wird.

Grundsätzlich können die Eingangsmessstation und die Ausgangsmessstation zusammengefasst sein und selbst eine oder mehrere Messeinrichtungen aufweisen. Besonders bevorzugt ist es nach einer Ausführungsvariante der Erfindung, dass in einer Fördereinrichtung des Linearförderers die Eingangsmessstation der Modulgruppe vorgeschaltet und die Ausgangsmessstation der Modulgruppe nachgeschaltet ist. Auf diese Weise kann ein gerichteter Materialfluss innerhalb einer Fertigungsanlage erreicht werden. Die Fertigungsanlage kann dabei eine Vorbearbeitung der Werkstücke, etwa mit einem spanabhebenden Bearbeiten, einem Aufrauen einer Oberfläche, einer Reinigung der Oberfläche oder ähnlichen Bearbeitungsvorgängen aufweisen. Weitere Bearbeitungsstationen können der Anlage zum Beschichten nachgeschaltet sein.

Für einen weitgehenden automatischen Arbeitsablauf ist es nach einer Weiterentwicklung der Erfindung vorteilhaft, dass mindestens eine Handhabungseinrichtung, insbesondere ein Mehrachsgreifer, vorgesehen ist, durch welche das Werkstück der Eingangsmessstation und/oder der Fördereinrichtung und/oder der Ausgangsmessstation zuführbar ist. So kann beispielsweise vor der Eingangsmessstation eine Handhabungseinrichtung angeordnet sein, durch welche das Werkstück etwa von einer Hauptfördereinrichtung der Eingangsmessstation zugeführt und nach dem Vermessen von der Eingangsmessstation der Fördereinrichtung zu den einzelnen Beschichtungsmodulen übergeben wird. In ähnlicher Weise kann vor der Ausgangsmessstation eine weitere Handhabungseinrichtung angeordnet sein, welche das Werkstück von der Fördereinrichtung ergreift und der Ausgangsmessstation zuführt und gegebenenfalls das Werkstück nach dem Vermessen in der Ausgangsmessstation der Hauptfördereinrichtung wieder zuführt. An den einzelnen Beschichtungsmodulen können selbst weitere Handhabungseinrichtungen, etwa Mehrachsgreifer oder einfache Zuführförderer angeordnet sein, um ein Werkstück von der Fördereinrichtung, insbesondere dem Linearförderer, dem ausgewählten Beschichtungsmodul zuzuführen. Das Werkstück kann auf einer Transportpalette aufgespannt sein, wobei das Werkstück in der aufgespannten Position gemessen, beschichtet und gefördert wird.

Eine weitere Ausführungsform der Erfindung ist dadurch gekennzeichnet, dass eine Steuereinrichtung vorgesehen ist, welche ausgebildet ist, die Fördereinrichtung zum Zuführen eines bestimmten Werkstückes zu einem bestimmten Beschichtungsmodul zu steuern, und dass die Steuereinrichtung weiterhin ausgebildet ist, dass bestimmte Beschichtungsmodul zum Aufbringen der metallischen Beschichtung auf das Werkstück abhängig von Messwerten des bestimmten Werkstücks zu steuern, welche in der Eingangsmessstation erfasst wurden. Die Anlage wird dabei insgesamt durch die Steuereinrichtung gesteuert. Nach dem Vermessen eines Werkstücks werden die erhaltenen Messwerte, welche insbesondere eine Oberflächenstruktur mit einem Verlauf der Höhen und Tiefen entlang der Oberfläche umfasst, von der Steuereinrichtung dem Beschichtungsmodul zugeleitet, welches frei ist und von der Steuereinrichtung zum Durchführen des Beschichtens bestimmt und ausgewählt wurde. Von der Steuereinrichtung der Gesamtanlage können die Daten zu einer Unter-Steuereinheit des jeweiligen Beschichtungsmoduls geleitet und geladen werden. Abhängig von den Werten der Eingangsmessung kann eine gewünschte Beschichtung an dem Werkstück durchgeführt werden.

Nach Abschluss des Beschichtens wird das beschichtete Werkstück abschließend vermessen, wobei die Messwerte, welche insbesondere ebenfalls einen Oberflächenverlauf und einen dicken Auftrag zu der Oberfläche umfassen, der Steuereinrichtung zugeleitet werden. Die Steuereinrichtung kann die Eingangswerte und die Ausgangswerte vergleichen und mit Werten betreffend das Beschichten von dem jeweiligen Beschichtungsmodul in Relation setzen. Hierdurch kann etwa festgestellt werden, ob das Werkstück ordnungsgemäß beschichtet wurde oder ein Fehler oder zumindest unerwünschte Abweichungen beim Beschichten in einem bestimmten Beschichtungsmodul aufgetreten sind. Dies ermöglicht, aufgetretene Fehler oder Abweichungen frühzeitig zu erkennen und insbesondere auch eine Tendenz zu Maßabweichungen in einem bestimmten Beschichtungsmodul rechtzeitig vor Auftreten von Ausschuss zu erkennen, um Parameter beim Beschichtungsprozess in einem Beschichtungsmodul zu ändern oder eine rechtzeitige Wartung eines Beschichtungsmoduls zu veranlassen.

Eine weitere Verbesserung kann gemäß einer Variante der Erfindung dadurch erzielt werden, dass jedes Beschichtungsmodul einen Tragrahmen aufweist und auswechselbar in der Modulgruppe angeordnet ist. Der Tragrahmen kann dabei in einem einfachen Fall aus einer palettenartigen Grundplatte und/oder einem kastenartigen Rahmen bestehen. Diese ermöglichen, ein Beschichtungsmodul mit einem Hubstapler oder einem Hallenkran zu bewegen. So kann beispielsweise ein Beschichtungsmodul in effizienter Weise durch ein neues Beschichtungsmodul ausgetauscht werden. Auch können problemlos Kapazitätsanpassungen durch Hinzufügen weiterer Beschichtungsmodule oder durch Abtransport nicht benötigter Beschichtungsmodule durchgeführt werden.

Grundsätzlich kann die Anordnung der Beschichtungsmodule in einer Modulgruppe beliebig sein. Vorteilhaft ist es nach einer Weiterbildung der Erfindung, dass die Beschichtungsmodule in einer Modulgruppe parallel zueinander angeordnet sind. Die Parallelanordnung bezieht sich nicht zwingend auf eine parallele räumliche Anordnung. Vielmehr ist der Begriff in Unterschied zu einer Reihenanordnung anzusehen, wobei bei der Parallelanordnung die einzelnen Beschichtungsmodule nebeneinander positioniert sind und parallel zueinander Beschichtungen durchführen können.

Eine weitere Erhöhung der Flexibilität bei Kapazitätsanpassungen wird nach einer Weiterbildung der Erfindung dadurch erzielt, dass mehrere Modulgruppen mit jeweils einer Eingangsmessstation und einer Ausgangsmessstation vorgesehen und parallel zueinander angeordnet sind. Auch hierbei können durch zwei oder mehr Modulgruppen mit jeweils mehreren Beschichtungsmodulen gleichzeitig eine Vielzahl von Werkstücken parallel beschichtet werden. Bei größeren Kapazitätsänderungen können so zusätzliche Modulgruppen hinzugefügt oder aus einer Gesamtanlage abgeschaltet werden.

Besonders vorteilhaft ist es dabei, dass zum Zuführen und Abführen der Werkstücke zu der mindestens einen Modulgruppe eine Hauptfördereinrichtung vorgesehen ist. Die Hauptfördereinrichtung verbindet die einzelnen Modulgruppen miteinander, welche in einer Parallelanordnung zueinander angeordnet sind. Die Hauptfördereinrichtung kann insbesondere ein Linearförderer sein, etwa eine Transportbahnmit umlaufenden Förderbändern.

Eine bevorzugte Ausführungsform der Erfindung besteht weiterhin darin, dass der einen Modulgruppe oder den mehreren Modulgruppen eine Nachbearbeitungsstation zugeordnet ist, welche zum abtragenden Bearbeiten der beschichteten Oberfläche des Werkstücks ausgebildet ist. Die abtragende Bearbeitung kann insbesondere ein Schleifen, Honen, Läppen oder Polieren der aufgebrachten metallischen Beschichtung sein.

Eine weitere vorteilhafte Ausführungsvariante der Erfindung kann darin gesehen werden, dass die Steuereinrichtung zum Steuern der Nachbearbeitungsstation abhängig von den Messwerten des beschichteten Werkstücks ausgebildet ist, welche von der Ausgangsmessstation erfasst worden sind, welche das Werkstück durchlaufen hat. Insbesondere kann dabei eine Schichthöhe und Ungleichmäßigkeiten in der Beschichtung von der Steuereinrichtung der Nachbearbeitungsstation übermittelt werden. Eine Unter-Steuereinheit in der Nachbearbeitungsstation kann basierend auf diesen Messwerten von der Ausgangsmessstation eine effektive Nachbearbeitung vorsehen.

Hinsichtlich des erfindungsgemäßen Verfahrens zum Beschichten von Werkstücken mit der zuvor beschriebenen Anlage ist vorgesehen, dass das zu beschichtende Werkstück einer Eingangsmessung zugeführt wird, in welcher eine Oberfläche einer zu beschichtenden Fläche des Werkstücks erfasst wird, mittels einer Fördereinrichtung das Werkstück zu einem der Beschichtungsmodule einer Modulgruppe geleitet wird, in welcher eine metallische Beschichtung auf die zu beschichtende Fläche des Werkstücks aufgebracht wird, und das beschichtete Werkstück einer Ausgangsmessstation zugeführt wird, in welcher die beschichtete Oberfläche des Werkstücks erfasst wird.

Mit diesem Verfahren kann die zuvor beschriebene Anlage gemäß der Erfindung betrieben werden. Dabei können die zuvor dargelegten Vorteile erzielt werden.

Das Beschichten kann ein geeignetes Beschichtungsverfahren sein, insbesondere ein Laserauftragsschweißen, ein Plasmaspritzen, ein Thermo-Spritzverfahren oder ähnliches.

Mit dem erfindungsgemäßen Verfahren können insbesondere Bremsscheiben oder Bremstrommeln oder sonstige Bremsenkomponenten als Massenteile effizient mit einer abriebfesten und/oder korrosionsbeständigen metallischen Beschichtung versehen werden. Durch derartige Bremsenkomponenten kann ein Abrieb beim Bremsen und damit ein Ausstoß von Feinstaub in ganz erheblichem Maße reduziert werden.

Nachfolgend wird die Erfindung anhand von bevorzugten Ausführungsbeispielen näher erläutert, welche schematisch in den Zeichnungen dargestellt sind. In den Zeichnungen zeigen:
- Fig.1: eine schematische Darstellung einer erfindungsgemäßen Anlage mit einer Modulgruppe;
- Fig. 2: eine schematische Darstellung zum Beschichten eines Werkstücks; und
- Fig. 3: eine perspektivische Ansicht einer weiteren erfindungsgemäßen Anlage mit mehreren Modulgruppen gemäß Fig. 1.

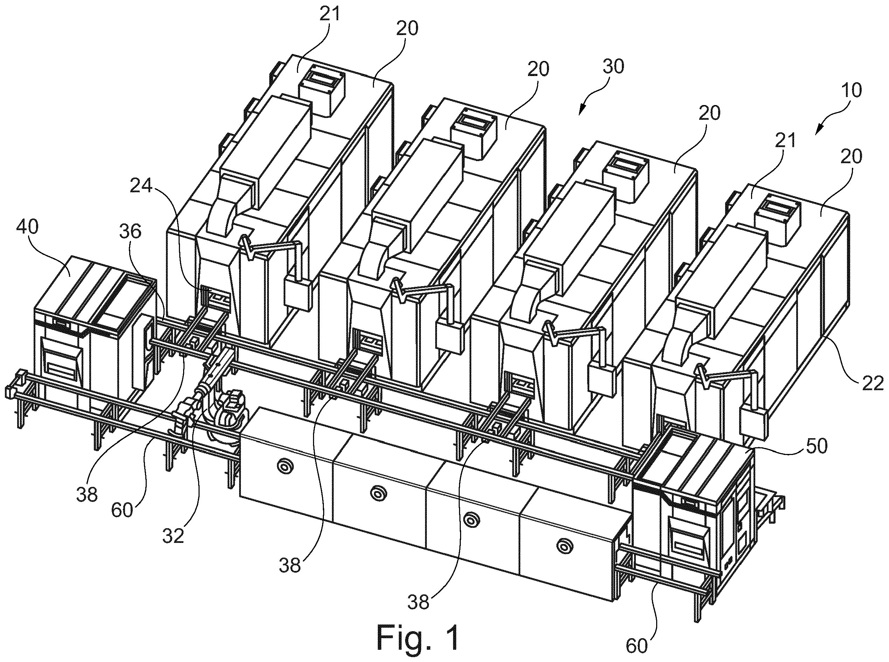

Ein erstes Ausführungsbeispiel einer erfindungsgemäßen Anlage 10 ist in Fig. 1 dargestellt. Diese umfasst vier Beschichtungsmodule 20, welche in einer Parallelanordnung nebeneinander eine Modulgruppe 30 bilden. Der Modulgruppe 30 vorgeschaltet ist eine Eingangsmessstation 40, zu welcher hier nicht dargestellte Werkstücke mittels einer Hauptfördereinrichtung 60 zugefördert werden. Mittels einer Handhabungseinrichtung 32, welche im vorliegenden Ausführungsbeispiel als ein Mehrachsroboter ausgeführt ist, werden die Werkstücke von der Hauptfördereinrichtung 60 ergriffen und der kastenförmigen Eingangsmessstation 40 zugeführt.

In der Eingangsmessstation 40 werden die Werkstücke vermessen, insbesondere eine zu beschichtende Oberfläche. Hierbei kann insbesondere eine Oberflächenstruktur der zu beschichtenden Fläche erfasst werden, wobei insbesondere Höhen und Tiefen in der Oberfläche erfasst und vermessen werden.

Anschließend kann das vermessene Werkstück aus der Eingangsmessstation 40 über die Handhabungseinrichtung 32 oder direkt aus der Eingangsmessstation 40 an eine lineare Fördereinrichtung 36 übergeben werden, welche entlang der Beschichtungsmodule 20 verläuft. Vor jedem Beschichtungsmodul 20 ist an der als Linearförderer ausgebildeten Fördereinrichtung 36 eine Zuführeinrichtung 38 angeordnet, mit welcher ein Werkstück in eine Eintrittsöffnung 24 in einem kastenförmigen Gehäuse 21 des ausgewählten Beschichtungsmoduls 20 eingeführt wird.

Die Beschichtungsmodule 20 sind gleich oder im Wesentlichen gleich ausgebildet und weisen einen Transportrahmen 22 auf. Mit diesem Transportrahmen 22 können die Beschichtungsmodule 20 mit einem Hallenkran oder einem Hubstapler bewegt und versetzt werden. Dies ermöglicht es, etwa im Falle einer Kapazitätsänderung zusätzliche Beschichtungsmodule 20 zuzufügen oder abzuführen oder zu Reparatur- oder Wartungszwecken ein bestehende Beschichtungsmodul 20 durch ein neues Beschichtungsmodul 20 auszutauschen.

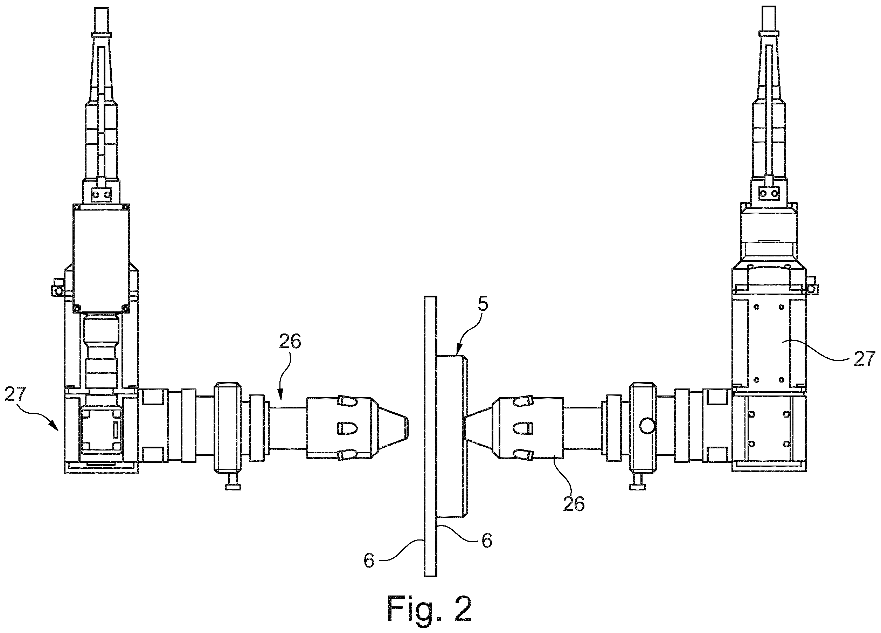

In dem Beschichtungsmodul 20 wird mindestens eine Fläche des Werkstücks 20 mit einer metallischen Beschichtung versehen, wie nachfolgend näher im Zusammenhang mit Fig. 2 erläutert werden wird. Nach der Beschichtung wird das Werkstück durch die Eintrittsöffnung 24 zurück auf die Fördereinrichtung 36 geleitet. Dies kann ebenfalls mit der Zuführeinrichtung 38 erfolgen. Durch die Fördereinrichtung 36 wird das beschichtete Werkstück zu einer gemeinsamen Ausgangsmessstation 50 transportiert, in welcher die beschichtete Oberfläche des Werkstücks vermessen wird. Nach diesem abschließenden Vermessen in der Ausgangsmessstation 50 wird das Werkstück zurück auf die Hauptfördereinrichtung 60 gesetzt, mit welcher das Werkstück zu einer weiteren Bearbeitung gefördert werden kann. Das Übertragen des Werkstücks von der Fördereinrichtung 36 in die Ausgangsmessstation 50 und wieder auf die Hauptfördereinrichtung 60 kann ebenfalls über eine Handhabungseinrichtung 32 wie an der Eingangsmessstation 40 erfolgen, wobei diese in Fig. 1 nicht dargestellt ist.

Die in der Eingangsmessstation 40 ermittelten Messwerte zu einem bestimmten Werkstück werden an eine zentrale Steuereinrichtung übermittelt. Durch die Steuereinrichtung wird auch die Fördereinrichtung 36 mit der jeweiligen Zuführeinrichtung 38 gesteuert, so dass das vermessene Werkstück einem bestimmten Beschichtungsmodul 20 der Modulgruppe 30 zugeleitet wird. Gleichzeitig werden dem ausgewählten oder bestimmten Beschichtungsmodul 20 von der Steuereinrichtung die Messwerte des bestimmten Werkstückes zugeleitet, so dass eine Beschichtung des Werkstücks abhängig von den Eingangsmesswerten erfolgen kann. Nach dem Beschichten wird das Werkstück in der kastenförmigen Ausgangsmessstation 50 vermessen, wobei die ermittelten Messwerte ebenfalls der zentralen Steuereinrichtung und dem Datensatz zu dem bestimmten Werkstück zugeleitet werden. In der Steuereinrichtung kann ein Vergleich der Eingangsmesswerte und der Ausgangsmesswerte sowie der Beschichtungsparameter durchgeführt werden, um festzustellen, ob eine korrekte Beschichtung erfolgt ist. Gegebenenfalls kann durch die Steuereinrichtung eine Nachstellung von Betriebsparametern eines Beschichtungsmoduls 20 beim Beschichten durchgeführt werden.

Gemäß Fig. 2 kann als zu beschichtendes Werkstück 5 ein scheibenförmiges Element vorgesehen sein, insbesondere eine Bremsscheibe mit einer oder zwei zu beschichtenden Flächen 6. Das Aufbringen der metallischen Beschichtung kann über eine Beschichtungsdüse 26 mittels Plasmabeschichten oder Laserauftragsschweißen durchgeführt werden. Die Beschichtungsdüse 26 ist an einem Träger 27 angeordnet. Beim Plasmaspritzen werden Metallpartikel in einem Lichtbogen aufgeschmolzen und mit hoher Geschwindigkeit auf die Fläche 6 aufgebracht. Beim Auftragsschweißen wird zunächst Beschichtungsmaterial, insbesondere ein Metallpulver, aufgebracht und dann mittels Laser lokal aufgeschmolzen. Dabei kann das Beschichten in mehreren Schritten und in mehreren Schichten erfolgen. Insbesondere können die Schichten auch mit unterschiedlichen Schichtdicken mit unterschiedlichen Materialien und unterschiedlichen Verfahren aufgebracht werden, um gewünschte Eigenschaften zu erreichen, insbesondere hinsichtlich Anhaftung, Abriebfestigkeit und/oder Korrosionsbeständigkeit.

Grundsätzlich ist es möglich, die Beschichtung mit einer Beschichtungsdüse 26 vorzunehmen, welche mittels des Trägers 27 entlang der zu beschichtenden Flächen 6 verfahren wird. Neben einem Plasmaspritzen und/oder einem Laserauftragsschweißen können auch andere thermische Metallbeschichtungsverfahren alternativ oder in Kombination miteinander eingesetzt werden.

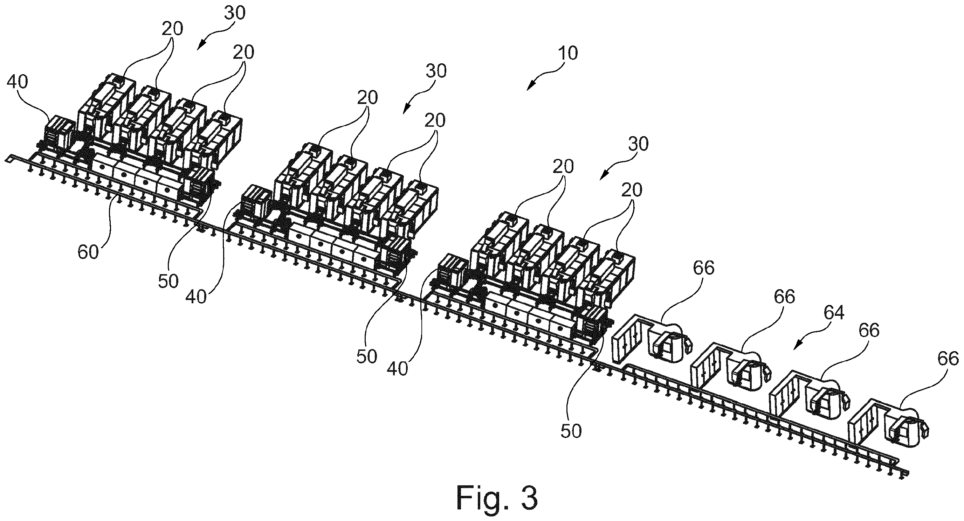

Eine Weiterbildung einer erfindungsgemäßen Anlage 10 mit insgesamt drei Modulgruppen 30 aus je vier Beschichtungsmodulen 20 ist in Fig. 3 dargestellt. Die einzelnen Modulgruppen 30 sind dabei entsprechend dem Ausführungsbeispiel gemäß Fig. 1 ausgebildet, wobei in jeder Modulgruppe 30 eine Eingangsmessstation 40 und eine Ausgangsmessstation 50 zugeordnet sind.

Die insgesamt drei Modulgruppen 30 sind entlang einer linearen Hauptfördereinrichtung 60 angeordnet, so dass bei dieser Parallelanordnung eine parallele Bearbeitung von Werkstücken in den einzelnen Modulgruppen 30 und in den einzelnen Bearbeitungsmodulen 20 erfolgen kann. Ein fertig beschichtetes Werkstück wird nach Durchgang durch die jeweilige Ausgangsmessstation 50 zurück auf die Hauptfördereinrichtung 60 geleitet, mit welcher das Werkstück einer Nachbearbeitungsstation 64 zugeleitet wird.

In dem dargestellten Ausführungsbeispiel gemäß Fig. 3 weist die Nachbearbeitungsstation 64 insgesamt vier parallel angeordnete Schleifvorrichtungen 66 auf. Mit den Schleifvorrichtungen 66 kann die mindestens eine beschichtete Fläche des Werkstücks abschließend bearbeitet und beschliffen werden. Um eine effiziente Nachbearbeitung sicherzustellen, können die erfassten Messwerte zu jedem Werkstück der bestimmten Schleifvorrichtung 66 in der Nachbearbeitungsstation 64 zugeleitet werden, welche zur Bearbeitung des Werkstücks von der Steuereinrichtung ausgewählt wurde. Abhängig beispielsweise von der erfassten Endhöhe der beschichteten Fläche des Werkstücks kann so eine effiziente Zustellung des Schleifwerkzeuges in der jeweiligen Schleifvorrichtung 66 an das Werkstück erfolgen.

Insbesondere aus dem Ausführungsbeispiel gemäß Fig. 3 ist zu ersehen, dass selbst bei größeren, eventuell notwendigen Kapazitätserweiterungen nicht nur einzelne Beschichtungsmodule 20 sondern ganze Modulgruppen 30 mit jeweils mehreren Beschichtungsmodulen 20 und zugehöriger Eingangsmessstation 40 und Ausgangsmessstation 50 einer Gesamtanlage ohne weiteres zugefügt werden können.

## Patentansprüche

1. Anlage zum Beschichten von Werkstücken (5), in Form von Bremsscheiben oder Bremstrommeln, mit einer Beschichtungsvorrichtung, welche zum Aufbringen einer metallischen Beschichtung auf eine Fläche (6) des Werkstücks (5) ausgebildet ist,
**dadurch gekennzeichnet,**
- **dass** mehrere Beschichtungsvorrichtungen zum Aufbringen einer metallischen Beschichtung, welche als gleichartige Beschichtungsmodule (20) ausgebildet sind, vorgesehen und in einer Modulgruppe (30) angeordnet sind,
- **dass** der Modulgruppe (30) eine Eingangsmessstation (40) zugeordnet ist, durch welche eine Oberfläche der zu beschichtenden Fläche (6) des Werkstücks (5) erfassbar ist,
- **dass** eine Fördereinrichtung (36) vorgesehen ist, durch welche ein Werkstück (5) von der Eingangsmessstation (40) einem der Beschichtungsmodule (20) zuführbar ist, und
- **dass** der Modulgruppe (30) eine Ausgangsmessstation (50) zugeordnet ist, durch welche eine Oberfläche der beschichteten Fläche (6) des Werkstücks (5) erfassbar ist.

2. Anlage nach Anspruch 1,
**dadurch gekennzeichnet,**
**dass** die Fördereinrichtung (36) einen Linearförderer aufweist, entlang welchem die einzelnen Beschichtungsmodule (20) angeordnet sind.

3. Anlage nach Anspruch 2,
**dadurch gekennzeichnet,**
**dass** in einer Förderrichtung des Linearförderers die Eingangsmessstation (40) der Modulgruppe (30) vorgeschaltet und die Ausgangsmessstation (50) der Modulgruppe (30) nachgeschaltet ist.

4. Anlage nach einem der Ansprüche 1 bis 3,
**dadurch gekennzeichnet,**
**dass** mindestens eine Handhabungseinrichtung (32), insbesondere ein Mehrachsgreifer, vorgesehen ist, durch welche das Werkstück (5) der Eingangsmessstation (40) und/oder der Fördereinrichtung (36) und/oder der Ausgangsmessstation (50) zuführbar ist.

5. Anlage nach einem der Ansprüche 1 bis 4,
**dadurch gekennzeichnet,**
**dass** eine Steuereinrichtung vorgesehen ist, welche ausgebildet ist, die Fördereinrichtung (36) zum Zuführen eines bestimmten Werkstückes (5) zu einem bestimmten Beschichtungsmodul (20) zu steuern, und
**dass** die Steuereinrichtung weiterhin ausgebildet ist, das bestimmte Beschichtungsmodul (20) beim Aufbringen der metallischen Beschichtung auf das Werkstück (5) abhängig von Messwerten des bestimmten Werkstücks (5) zu steuern, welche in der Eingangsmessstation (40) erfasst wurden.

6. Anlage nach einem der Ansprüche 1 bis 5,
**dadurch gekennzeichnet,**
**dass** jedes Beschichtungsmodul (20) einen Transportrahmen (22) aufweist und auswechselbar in der Modulgruppe (30) angeordnet ist.

7. Anlage nach einem der Ansprüche 1 bis 6,
**dadurch gekennzeichnet,**
**dass** die Beschichtungsmodule (20) in einer Modulgruppe (30) parallel zueinander angeordnet sind.

8. Anlage nach einem der Ansprüche 1 bis 7,
**dadurch gekennzeichnet,**
**dass** mehrere Modulgruppen (30) mit jeweils einer Eingangsmessstation (40) und einer Ausgangsmessstation (50) vorgesehen und parallel zueinander angeordnet sind.

9. Anlage nach einem der Ansprüche 1 bis 8,
**dadurch gekennzeichnet,**
**dass** zum Zuführen und Abführen der Werkstücke (5) zu der mindestens einen Modulgruppe (30) eine Hauptfördereinrichtung (60) vorgesehen ist.

10. Anlage nach einem der Ansprüche 1 bis 9,
**dadurch gekennzeichnet,**
**dass** der einen Modulgruppe (30) oder den mehreren Modulgruppen (30) eine Nachbearbeitungsstation (64) zugeordnet ist, welche zum abtragenden Bearbeiten der beschichteten Oberfläche des Werkstücks (5) ausgebildet ist.

11. Anlage nach Anspruch 10,
**dadurch gekennzeichnet,**
**dass** die Steuereinrichtung zum Steuern der Nachbearbeitungsstation (64) abhängig von Messwerten des beschichteten Werkstücks (5) ausgebildet ist, welche von der Ausgangsmessstation (50) erfasst worden sind, welche das Werkstück (5) durchlaufen hat.

12. Verfahren zum Beschichten von Werkstücken (5) in Form von Bremsscheiben oder Bremstrommeln, mit einer Anlage (10) nach einem der Ansprüche 1 bis 11, wobei
- das zu beschichtende Werkstück (5) einer Eingangsmessstation (40) zugeführt wird, in welcher eine Oberfläche einer zu beschichtenden Fläche (6) des Werkstücks (5) erfasst wird,
- mittels einer Fördereinrichtung (36) das Werkstück (5) zu einem der Beschichtungsmodule (20) einer Modulgruppe (30) geleitet wird, in welcher eine metallische Beschichtung auf die zu beschichtende Fläche (6) des Werkstücks (5) aufgebracht wird, und
- das beschichtete Werkstück (5) einer Ausgangsmessstation (50) zugeführt wird, in welcher die beschichtete Oberfläche des Werkstücks (5) erfasst wird.

## Claims

1. Plant for coating workpieces (5), in form of brake discs or brake drums, with a coating device which is designed to apply a metallic coating to a surface (6) of the workpiece (5),
**characterized,**
- **in that** several coating devices to apply a metallic layer, which are designed as coating modules (20) of the same type, are provided and arranged in a module group (30),
- **in that** the module group (30) is assigned an input measuring station (40) through which a surface of the surface (6) of the workpiece (5) to be coated can be detected,
- **in that** a conveyor device (36) is provided, through which a workpiece (5) can be fed from the input measuring station (40) to one of the coating modules (20), and
- **in that** the module group (30) is assigned an output measuring station (50) through which a surface of the coated surface (6) of the workpiece (5) can be detected.

2. Plant according to claim 1,
**characterized,**
**in that** the conveyor device (36) has a linear conveyor, along which the individual coating modules (20) are arranged.

3. Plant according to claim 2,
**characterized,**
**in that** the input measuring station (40) is connected upstream of the module group (30) and the output measuring station (50) is connected downstream of the module group (30) in a conveying direction of the linear conveyor.

4. Plant according to one of claims 1 to 3,
**characterized,**
**in that** at least one handling device (32), in particular a multi-axis gripper, is provided, through which the workpiece (5) can be fed to the input measuring station (40) and/or the conveyor device (36) and/or the output measuring station (50).

5. Plant according to one of claims 1 to 4,
**characterized,**
**in that** a control device is provided which is designed to control the conveyor device (36) for feeding a specific workpiece (5) to a specific coating module (20), and in that the control device is also designed to control the specific coating module (20) when applying the metallic coating on the workpiece (5) depending on measured values of the specific workpiece (5), which were recorded in the input measuring station (40).

6. Plant according to one of claims 1 to 5,
**characterized,**
**in that** each coating module (20) has a transport frame (22) and is arranged in the module group (30) in an exchangeable manner.

7. Plant according to one of claims 1 to 6,
**characterized,**
**in that** the coating modules (20) are arranged parallel to one another in a module group (30).

8. Plant according to one of claims 1 to 7,
**characterized,**
**in that** several module groups (30) each having an input measuring station (40) and an output measuring station (50) are provided and arranged parallel to one another.

9. Plant according to one of claims 1 to 8,
**characterized,**
**in that** a main conveying device (60) is provided for feeding and removing the workpieces (5) to the at least one module group (30).

10. Plant according to one of claims 1 to 9,
**characterized,**
**in that** the one module group (30) or the several module groups (30) is assigned a post-processing station (64) which is designed to ablative machine the coated surface of the workpiece (5).

11. Plant according to claim 10,
**characterized,**
**in that** the control device is designed to control the post-processing station (64) depending on measured values of the coated workpiece (5) which have been recorded by the output measuring station (50) through which the workpiece (5) has passed.

12. Method for coating workpieces (5), in the form of brake discs or brake drums, using a plant (10) according to one of claims 1 to 11,
wherein
- the workpiece (5) to be coated is fed to an input measuring station (40), in which a surface of a surface (6) of the workpiece (5) to be coated is detected,
- the workpiece (5) is conveyed by means of a conveyor (36) to one of the coating modules (20) of a module group (30), in which a metallic coating is applied to the surface (6) of the workpiece (5) to be coated, and
- the coated workpiece (5) is fed to an output measuring station (50) in which the coated surface of the workpiece (5) is detected.

## Revendications

1. Installation de revêtement de pièces à usiner (5), sous la forme de disques de frein ou tambours de frein, avec un dispositif de revêtement qui est réalisé pour l'application d'un revêtement métallique sur une surface (6) de la pièce à usiner (5), **caractérisée en ce**
- **que** plusieurs dispositifs de revêtements sont prévus pour l'application d'un revêtement métallique, lesquels sont réalisés comme modules de revêtement (20) de même type et sont agencés dans un groupe de module (30),
- **qu'**au groupe de module (30) est associée une station de mesure d'entrée (40), par laquelle une surface de la surface (6) à revêtir de la pièce à usiner (5) peut être détectée,
- **qu'**un dispositif de transport (36) est prévu, par lequel une pièce à usiner (5) peut être fournie par la station de mesure d'entrée (40) à un des modules de revêtement (20), et
- **qu'**au groupe de modèle (30) est associée une station de mesure de sortie (50), par laquelle une surface de la surface (6) revêtue de la pièce à usiner (5) peut être détectée.

2. Installation selon la revendication 1,
**caractérisée en ce**
**que** le dispositif de transport (36) présente un transporteur linéaire, le long duquel les modules de revêtement (20) individuels sont agencés.

3. Installation selon la revendication 2,
**caractérisée en ce**
**que** dans un sens de transport du transporteur linéaire, la station de mesure d'entrée (40) est montée en amont du module de groupe (30) et la station de mesure de sortie (50) est montée en aval du groupe de module (30).

4. Installation selon l'une des revendications 1 à 3,
**caractérisée en ce**
**qu'**au moins un dispositif de manipulation (32), en particulier une pince à plusieurs axes est prévue, par laquelle la pièce à usiner (5) peut être fournie à la station de mesure d'entrée (40) et/ou au dispositif de transport (36) et/ou à la station de mesure de sortie (50).

5. Installation selon l'une des revendications 1 à 4,
**caractérisée en ce**
**qu'**un dispositif de commande est prévu, lequel est réalisé afin de commander le dispositif de transport (36) pour la fourniture d'une pièce à usiner (5) déterminée à un module de revêtement (20) déterminé, et
**que** le dispositif de commande est en outre réalisé afin de commander le module de revêtement (20) déterminé lors de l'application du revêtement métallique sur la pièce à usiner (5) en fonction des valeurs de mesure de la pièce à usiner (5) déterminée, qui ont été détectées dans la station de mesure d'entrée (40).

6. Installation selon l'une des revendications 1 à 5,
**caractérisée en ce**
**que** chaque module de revêtement (20) présente un cadre de transport (22) et est agencé de manière interchangeable dans le groupe de module (30).

7. Installation selon l'une des revendications 1 à 6,
**caractérisée en ce**
**que** les modules de revêtement (20) sont agencés dans un groupe de module (30) parallèlement les uns aux autres.

8. Installation selon l'une des revendications 1 à 7,
**caractérisée en ce**
**que** plusieurs groupes de module (30) sont prévus avec respectivement une station de mesure d'entrée (40) et une station de mesure de sortie (50) et sont agencés parallèlement les uns aux autres.

9. Installation selon l'une des revendications 1 à 8,
**caractérisée en ce**
**qu'**un dispositif de transport principal (60) est prévu pour la fourniture et l'évacuation des pièces à usiner (5) vers l'au moins un groupe de module (30).

10. Installation selon l'une des revendications 1 à 9,
**caractérisée en ce**
**qu'**une station de réusinage (64) est associée à l'un groupe de module (30) ou aux plusieurs groupes de module (30), laquelle est réalisée pour l'usinage par enlèvement de copeaux de la surface revêtue de la pièce à usiner (5).

11. Installation selon la revendication 10,
**caractérisée en ce**
**que** le dispositif de commande est réalisé pour la commande de la station de réusinage (64) en fonction des valeurs de mesure de la pièce à usiner (5) revêtue qui ont été détectées par la station de mesure de sortie (50), par laquelle est passée la pièce à usiner (5).

12. Procédé de revêtement de pièces à usiner (5) sous la forme de disques de frein ou tambours de frein, avec une installation (10) selon l'une des revendications 1 à 11, dans lequel
- la pièce à usiner (5) à revêtir est fournie à une station de mesure d'entrée (40), dans laquelle une surface d'une surface (6) à revêtir de la pièce à usiner (5) est détectée,
- au moyen d'un dispositif de transport (36), la pièce à usiner (5) est conduite à un des modules de revêtement (20) d'un groupe de module (30), dans lequel un revêtement métallique est appliqué sur la surface (6) à revêtir de la pièce à usiner (5), et
- la pièce à usiner (5) revêtue est fournie à une station de mesure de sortie (50), dans laquelle la surface revêtue de la pièce à usiner (5) est détectée.
